# FASCICULE DE BREVET EUROPEEN

(11) **EP 2 878 467 B1**
(45) Date de publication et mention de la délivrance du brevet: **21.08.2019**
(21) Numéro de dépôt: 14193985.0
(22) Date de dépôt: 20.11.2014
(51) Int. Cl.: B60H 1/00

(54) **Dispositif conducteur d'air concu pour le maintien d'un radiateur de chauffage automobile et son etancheite**
Luftleitungsvorrichtung, die der Erhaltung eines Heizradiators eines Kraftfahrzeugs dient, und Dichtung
Air-conductor device designed for holding an automotive heating radiator and ensuring the seal thereof

(30) Priorité: 29.11.2013 FR 1361861
(43) Date de publication de la demande: 03.06.2015
(73) Titulaire: VALEO SYSTEMES THERMIQUES, 78320 Le Mesnil Saint-Denis (FR)
(72) Inventeur: Pierres, Philippe, 78990 ELANCOURT (FR); Liska, Jan, 25228 Cernosice (CZ)
(74) Mandataire: Metz, Gaëlle

(56) Documents cités:
- EP-A2- 1 310 389
- FR-A1- 2 751 921
- US-A- 4 523 633
- US-A- 5 737 936
- US-A1- 2002 029 549

## Description

La présente invention se rapporte au domaine technique des dispositifs assurant l'étanchéité des radiateurs des boitiers HVAC pour les véhicules automobiles. Le domaine de l'invention se rapporte également au dispositif permettant de maintenir lesdits radiateurs et d'offrir une solution compacte permettant de diminuer les coûts et faciliter les opérations de maintenance, comme divulgué par US 4,523,633 A.

Actuellement, sur les véhicules automobiles, un organe est responsable du chauffage, de la ventilation et de la climatisation lorsqu'elle est présente, cet organe est communément appelé HVAC, ce qui signifie dans la terminologie anglo-saxonne « Heat Ventilation and Air-Conditioning ». Le HVAC comprend différentes fonctions relatives au traitement de l'air dans l'habitacle d'un véhicule. Le HVAC comprend différentes pièces contribuant aux différentes fonctions qui sont soient intégrées au boitier soit en périphérie. Certaines pièces nécessitent une interconnexion entre elles ou avec le boitier HVAC, notamment sur les surfaces extérieures du boitier.

Etant donné que le HVAC assure des fonctions notamment de régulation de chaleur, il est important que les pièces interconnectées soient protégées et soient correctement maintenues tout en préservant une étanchéité des différentes entrées et sortie d'air ainsi que des radiateurs.

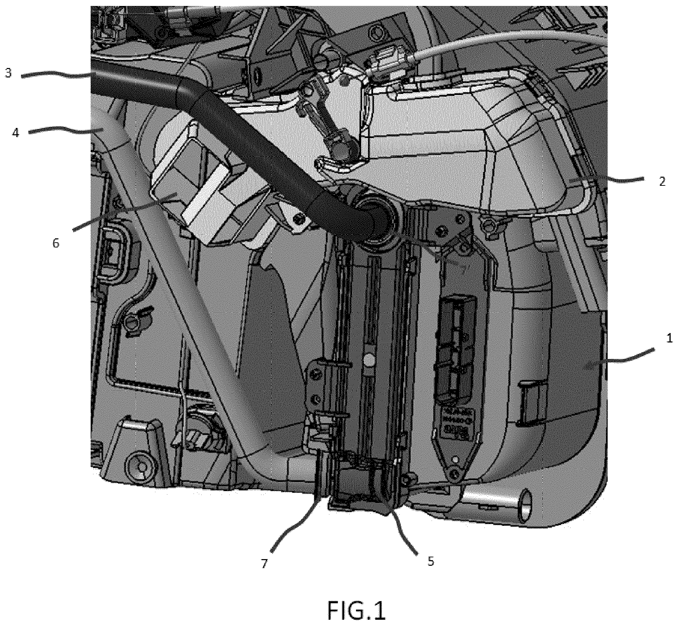

La figure 1 représente un cas de figure rencontré dans l'art existant de certaines pièces montées sur un HVAC. Un boitier principal 1 comprend différentes pièces assurant les fonctions de l'organe précédemment désigné par le HVAC, c'est-à-dire les différents composants assurant le bon fonctionnement des fonctions de conditionnement d'air, de ventilation et de chauffage, tel que notamment :
- un évaporateur permettant de générer un flux d'air frais ;
- un radiateur permettant de générer un flux d'air chaud ;
- un pulseur.

La figure 1 représente un boitier HVAC 1 dans lequel une tubulure d'arrivée d'eau 3 achemine un volume d'eau dans le radiateur 5 et une tubulure de sortie d'eau 4 permet l'évacuation de l'eau transitant dans le radiateur.

Un capot 5 permet de réaliser une fonction de maintien du radiateur (représenté sous le capot et donc non visible sur la figure 1) et d'étanchéité du radiateur ainsi que des jonctions des tubulures 7 et 7' avec l'habitacle.

Un dispositif conducteur d'air 2 permet d'acheminer l'air chaud provenant du boitier HVAC vers une sortie 6 à destination d'une zone de l'habitacle correspondant à la zone des pieds d'un passager ou d'un conducteur.

Le boitier HVAC, les tubulures, le radiateur et le capot du radiateur forment un système de conduction d'air pour véhicule.

Les systèmes de conduction d'air connus de l'art antérieur comportent certains inconvénients. Notamment, les tubulures apparentes dans la zone des pieds d'un conducteur ou d'un passager peuvent entrainer des brulures lorsque l'habitacle n'intègre pas de protections adéquates. En outre, le capot 5 du radiateur et le dispositif conducteur 2 comprennent de nombreuses interfaces de jonction telles que des vis, des écrous, des clips, des points de soudures ce qui complexifie le montage des pièces les unes vis-à-vis des autres.

L'invention permet de résoudre les inconvénients précités.

Un objet de l'invention concerne un dispositif conducteur d'air selon la revendication 1.

Un avantage d'un tel dispositif conducteur est d'offrir une unique pièce monobloc permettant d'assurer la conduite de l'air tout en protégeant un conducteur ou un passager de brulures pouvant survenir au contact de ses jambes avec le radiateur et/ou les tubulures. De ce fait le dispositif conducteur offre un gain de sécurité vis-à-vis de la protection offerte. Enfin, le dispositif conducteur permet également d'assurer une bonne étanchéité et un maintien du radiateur. Les premier et second volumes sont indépendants l'un de l'autre, séparés par exemple par une cloison ou un rebord. Le dispositif permet un montage simplifié du dispositif conducteur sur le boitier HVAC. Les opérations de maintenance sont plus simples sur le boitier HVAC.

Avantageusement, le dispositif conducteur d'air comprend des moyens de fixations au HVAC. Les moyens de fixations permettent d'éviter de maintenir la pièce sur le boitier HVAC.

Selon les différents modes de réalisations, les moyens de fixation comprennent pris séparément ou ensemble :
- un système de vis et de boulons ;
- un système de clippage ;
- un système de vis et de boulons ;
- des boutrolles ;
- des points de soudure.

Un avantage du dispositif de l'invention, lorsque le capot est fixé au HVAC, est que le second volume peut être rendu étanche vis-à-vis du premier volume par une séparation au niveau d'une arête intérieure apte à coopérer avec le tiroir du radiateur.

Avantageusement pour réaliser la fonction d'étanchéité, le dispositif d'étanchéité comprend des rebords adaptés à coopérer avec un tiroir de logement du radiateur. Dans un mode amélioré des joints sont fixés le long des rebords.

Un autre objet de l'invention concerne un système conducteur d'air pour véhicule automobile comprenant un HVAC comportant un boitier et un dispositif conducteur de l'invention.

Un autre objet de l'invention concerne un véhicule automobile comprenant un système conducteur d'air comportant un dispositif conducteur d'air de l'invention.

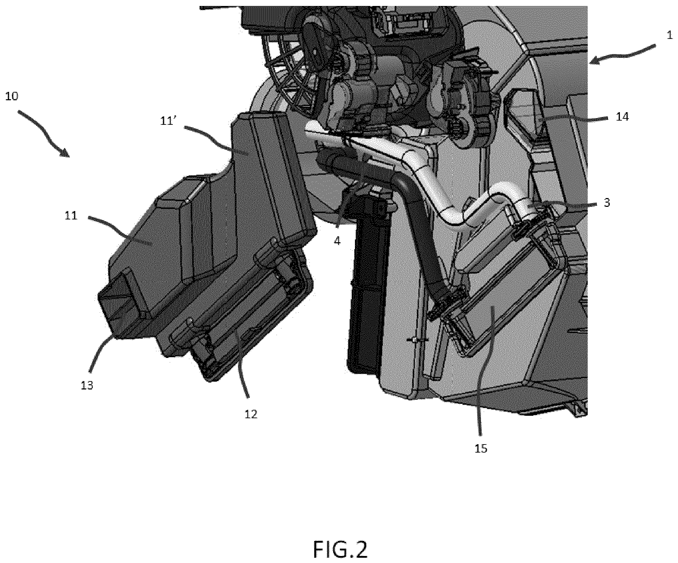

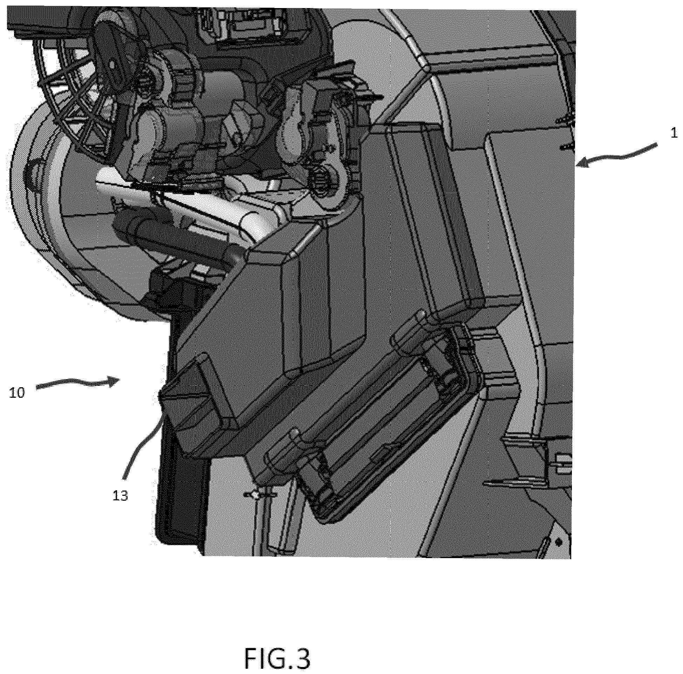

D'autres caractéristiques et avantages de l'invention ressortiront à la lecture de la description détaillée qui suit, en référence aux figures annexées, qui illustrent :
▪ figure 1 : une vue 3D d'une solution de l'art antérieur ;
▪ figure 2 : une vue 3D d'un dispositif conducteur de l'invention non monté sur un HVAC ;
▪ figure 3 : une vue 3D d'un dispositif conducteur de l'invention monté sur un HVAC.

La figure 2 représente un mode de réalisation de l'invention dans lequel un dispositif conducteur d'air 10 est représenté en vue 3D ainsi qu'une face latérale d'un boitier 1 HVAC comprenant un radiateur 15 et des tubulures latérales 3 et 4. Le dispositif conducteur 10 forme un conduit de diffusion d'air intégrant un capot comprenant un volume 12 de maintien d'un radiateur 15. Ainsi le dispositif conducteur permet l'acheminement de l'air tout en maintenant le radiateur.

Une troisième fonction, outre la conduite de l'air et le maintien du radiateur, est assurée par le capot et plus particulièrement par le volume 12, il s'agit d'une fonction d'étanchéité. En effet, le volume 12 permet de rendre étanche le radiateur ainsi que les jonctions des tubulures 3, 4 avec l'habitacle. De ce fait la fonction d'étanchéité est liée à la fonction de protection offerte à un passager ou un conducteur pour que ses jambes ne soient pas directement en contact avec le radiateur.

D'autre part, le volume 12 peut assurer optionnellement une autre fonction d'étanchéité vis-à-vis des volumes 11, 11' permettant l'acheminement de l'air jusqu'à la sortie 13.

En outre, lorsqu'il est fixé, le dispositif conducteur 10 réalise une fonction de protection d'une portion des tubulures 3, 4 et du radiateur 15.

Le boitier 1 comprend une sortie d'air chaud 14 qui alimente un flux d'air à l'intérieur du dispositif conducteur 10 lorsqu'il est monté sur le boitier 1.

Le flux d'air acheminé depuis la sortie 14 est entrant dans le capot du dispositif conducteur 10 se répand dans un volume 11', 11 pour être acheminé vers une sortie 13 de sorte à réchauffer une zone à proximité des pieds d'un conducteur ou d'un passager d'un véhicule.

Lorsque le capot est fixé au boitier 1, le volume 11, 11' ne comporte pas nécessairement une ouverture vers le volume 12.

Dans un premier mode, le volume 12 est fermé lorsque le capot est fixé sur le boitier 1, c'est-à-dire que l'isolation du radiateur est bien assurée.

Dans un second mode, le volume 12 partage au moins une ouverture avec au moins l'un des deux volumes 11 ou 11'. Cette solution permet d'assurer une étanchéité minimale du radiateur vis-à-vis de l'habitacle tout en laissant une circulation d'air entre les volumes du capot pour assurer un rôle de régulation de température entre tous les volumes du dispositif conducteur 10.

Dans un mode particulier de l'invention, le volume 11 comprend une surépaisseur de volume vis-à-vis du volume 11'. Cette conception permet de recouvrir plus aisément une partie des tubulures et de créer une zone de dépression permettant de plus facilement écouler le flux d'air chaud vers la sortie 13.

Le dispositif conducteur 10 comprend en outre dans la conception de son volume 12 adapté à maintenir un radiateur 13, des rebords pour coopérer avec les bords d'un tiroir conçu dans le boitier 1 pour y placer le radiateur 15.

Dans un mode de réalisation, les rebords du volume 12 comprennent alors pour assurer une bonne étanchéité des joints recouvrant tout ou partie(s) des rebords du volume intérieur 12 pour coopérer avec les bords du tiroirs du boitier 1 ainsi qu'avec les jonctions des tubulures 3, 4.

La figure 3 représente le dispositif conducteur 10 fixé au boitier 1 HVAC. Ce dernier comprend des moyens de fixation du capot au boitier 1. Les moyens de fixations peuvent comprendre des vis et des boulons et/ou un système de clippage comprenant au moins deux clips répartis à différents endroits de la périphérie du dispositif conducteur 10. En outre, les moyens de fixations peuvent comprendre en plus ou montés séparément des points de soudure et/ou des boutrolles.

Un intérêt de l'invention est de présenter une unique pièce formant le dispositif conducteur 10 assurant les fonctions suivantes :
- une fonction de conduit d'air permettant l'acheminement de l'air chaud provenant du boitier HVAC 1 vers la sortie 13 ;
- une fonction de maintien du radiateur et des tubulures sur le HVAC
- une fonction d'étanchéité du radiateur et des jonctions de tubulures sur le radiateur avec l'habitacle ;
- une double fonction de protection :
   ∘ assurant une première protection des tubulures vis-à-vis de mouvements de jambes ou de pieds dans une zone à proximité du boitier ;
   ∘ assurant une seconde fonction de protection des jambes vis-à-vis des brulures pouvant être causées par une chaleur trop importante au niveau du radiateur.

## Revendications

1. Dispositif conducteur d'air (10) destiné à être monté sur un boitier HVAC (1) comprenant un radiateur (15) et des tubulures latérales (3, 4) pour véhicule automobile, comprenant un capot comprenant un premier volume (11 , 11') collecteur d'air chaud provenant d'une sortie d'air (14) du boitier HVAC et une sortie d'air (13) permettant l'évacuation de l'air chaud, ledit dispositif conducteur d'air (10) comprenant en outre une portion (12) formant un second volume destiné à maintenir le radiateur (15) dans une position fixe, les premier et second volumes étant solidaires du capot, **caractérisé en ce que** le dispositif conducteur d'air forme une pièce monobloc et le dispositif conducteur (10) réalise une fonction de protection d'une portion des tubulures (3, 4) et du radiateur (15).

2. Dispositif conducteur d'air (10) selon la revendication 1, caractérisé en que le dispositif conducteur d'air (10) comprend des moyens de fixations au HVAC.

3. Dispositif conducteur d'air (10) selon la revendication 2, caractérisé en que les moyens de fixations comprennent un système de vis et de boulons.

4. Dispositif conducteur d'air (10) selon l'une quelconque des revendications 2 à 3, caractérisé en que les moyens de fixations comprennent en outre un système de clippage.

5. Dispositif conducteur d'air (10) selon l'une quelconque des revendications 2 à 4, caractérisé en que les moyens de fixations comprennent en outre des boutrolles.

6. Dispositif conducteur d'air (10) selon l'une quelconque des revendications 2 à 5, caractérisé en que les moyens de fixations comprennent en outre des points de soudure.

7. Dispositif conducteur d'air (10) selon l'une quelconque des revendications 1 à 6, caractérisé en que le second volume comprend un dispositif d'étanchéité vis-à-vis du premier volume lorsque le capot est fixé au HVAC.

8. Dispositif conducteur d'air (10) selon l'une quelconque des revendications 1 à 7, caractérisé en que le dispositif d'étanchéité comprend des rebords adaptés à coopérer avec un tiroir de logement du radiateur et que des joints sont fixés le long des rebords.

9. Système conducteur d'air pour véhicule automobile comprenant un HVAC comportant un boitier (1) et un dispositif conducteur (10) selon l'une des revendications précédentes.

10. Véhicule automobile **caractérisé en ce qu'**il comprend un système conducteur d'air selon la revendication 9.

## Patentansprüche

1. Luftleitvorrichtung (10), die dazu bestimmt ist, auf ein HVAC-Gehäuse (1) montiert zu werden, das einen Radiator (15) und seitliche Rohrstutzen (3, 4) für ein Kraftfahrzeug enthält, die eine Haube enthält, die ein erstes Sammelvolumen (11, 11') warmer Luft, die von einem Luftauslass (14) des HVAC-Gehäuses kommt, und einen Luftauslass (13) enthält, der die Abfuhr der warmen Luft erlaubt, wobei die Luftleitvorrichtung (10) außerdem einen ein zweites Volumen bildenden Teil (12) enthält, der dazu bestimmt ist, den Radiator (15) in einer ortsfesten Stellung zu halten, wobei das erste und das zweite Volumen fest mit der Haube verbunden sind, **dadurch gekennzeichnet, dass** die Luftleitvorrichtung ein einstückiges Bauteil bildet und die Leitvorrichtung (10) eine Schutzfunktion eines Teils der Rohrstutzen (3, 4) und des Radiators (15) erfüllt.

2. Luftleitvorrichtung (10) nach Anspruch 1, **dadurch gekennzeichnet, dass** die Luftleitvorrichtung (10) Einrichtungen zur Befestigung am HVAC-System enthält.

3. Luftleitvorrichtung (10) nach Anspruch 2, **dadurch gekennzeichnet, dass** die Befestigungseinrichtungen ein System aus Schrauben und Bolzen enthalten.

4. Luftleitvorrichtung (10) nach einem der Ansprüche 2 bis 3, **dadurch gekennzeichnet, dass** die Befestigungseinrichtungen außerdem ein Einklinksystem enthalten.

5. Luftleitvorrichtung (10) nach einem der Ansprüche 2 bis 4, **dadurch gekennzeichnet, dass** die Befestigungseinrichtungen außerdem Döpper enthalten.

6. Luftleitvorrichtung (10) nach einem der Ansprüche 2 bis 5, **dadurch gekennzeichnet, dass** die Befestigungseinrichtungen außerdem Schweißpunkte enthalten.

7. Luftleitvorrichtung (10) nach einem der Ansprüche 1 bis 6, **dadurch gekennzeichnet, dass** das zweite Volumen eine Dichtungsvorrichtung gegenüber dem ersten Volumen enthält, wenn die Haube am HVAC-System befestigt ist.

8. Luftleitvorrichtung (10) nach einem der Ansprüche 1 bis 7, **dadurch gekennzeichnet, dass** die Dichtungsvorrichtung Randleisten enthält, die geeignet sind, mit einem Aufnahmeeinschub des Radiators zusammenzuwirken, und dass Dichtungen entlang der Randleisten befestigt sind.

9. Luftleitsystem für ein Kraftfahrzeug, das ein HVAC-System enthält, das ein Gehäuse (1) und eine Leitvorrichtung (10) nach einem der vorhergehenden Ansprüche enthält.

10. Kraftfahrzeug, **dadurch gekennzeichnet, dass** es ein Luftleitsystem nach Anspruch 9 enthält.

## Claims

1. Air conducting device (10) intended to be mounted on an HVAC housing (1), comprising a radiator (15) and lateral pipes (3, 4) for a motor vehicle, comprising a cover comprising a first volume (11, 11') collecting hot air from an air outlet (14) of the HVAC housing and an air outlet (13) for discharging hot air, the said air conducting device (10) further comprising a portion (12) forming a second volume intended to hold the radiator (15) in a fixed position, the first and second volumes being attached to the cover, **characterized in that** the air conducting device forms a one-piece component and the conducting device (10) performs a function of protecting a portion of the pipes (3, 4) and the radiator (15).

2. Air conducting device (10) according to Claim 1, **characterized in that** the air conducting device (10) comprises means of attachment to the HVAC.

3. Air conducting device (10) according to Claim 2, **characterized in that** the means of attachment comprise a system of threaded fasteners.

4. Air conducting device (10) according to either one of Claims 2 and 3, **characterized in that** the means of attachment further comprise a clipping system.

5. Air conducting device (10) according to any one of Claims 2 to 4, **characterized in that** the means of attachment further comprise staking.

6. Air conducting device (10) according to any one of Claims 2 to 5, **characterized in that** the means of attachment further comprise spot welds.

7. Air conducting device (10) according to any one of Claims 1 to 6, **characterized in that** the second volume comprises a device affording sealing with respect to the first volume when the cover is attached to the HVAC.

8. Air conducting device (10) according to any one of Claims 1 to 7, **characterized in that** the sealing device comprises lips designed to collaborate with a radiator housing slide and **in that** seals are fixed along the lips.

9. Air conducting system for a motor vehicle comprising an HVAC comprising a housing (1) and a conducting device (10) according to one of the preceding claims.

10. Motor vehicle **characterized in that** it comprises an air conducting system according to Claim 9.
